# EUROPEAN PATENT APPLICATION

(11) **EP 4 657 847 A1**
(43) Date of publication of application: **03.12.2025**
(21) Application number: 25176672.1
(22) Date of filing: 15.05.2025
(51) Int. Cl.: H04N 7/18, H04N 23/60, G06F 21/64, H04L 9/40

(54) **VIDEO TRANSMISSION APPARATUS, VIDEO RECEPTION APPARATUS, VIDEO SYSTEM, VIDEO TRANSMISSION METHOD, VIDEO RECEPTION METHOD, AND PROGRAM**

(30) Priority: 30.05.2024 JP 2024088417
(71) Applicant: CANON KABUSHIKI KAISHA, Tokyo 146-8501 (JP)
(72) Inventor: HONJO, Wataru, Tokyo, 146-8501 (JP)
(74) Representative: Canon Europe Limited

(57) **Abstract**

A video reception apparatus configured to communicate with a video transmission apparatus includes a reception unit configured to receive video data via the communication, a determination unit configured to determine whether the received video data has been tampered with, and a transmission unit configured to transmit, to the video transmission apparatus, a command to start video data recording in a case where the received video data is determined to have been tampered with.

## Description

### BACKGROUND OF THE INVENTION

### Field of the Invention

The present invention relates to a technology related to video.

### Description of the Related Art

There is technology for detecting video data tampering. Regarding tampering detection, an Open Network Video Interface Forum (ONVIF) standard for connections between an imaging apparatus and a client apparatus is advancing the standardization of methods for attaching tampering detection data to video data. ONVIF stands for Open Network Video Interface Forum.

ONVIF is discussing having an imaging apparatus attach a digital signature based on a hash value of video data to Supplemental Enhancement Information (SEI) included in a Network Abstraction Layer (NAL) unit in an encoding method, such as H.264 or H.265, and then transmit the video data with the digital signature. Discussions also include having the client apparatus determine the presence or absence of tampering by comparing the received digital signature with the hash value of the video data. Here, NAL unit stands for Network Abstraction Layer Unit.

Regarding such technology for detecting video data tampering, Japanese Patent Application Laid-Open No. 2017-41841 discusses displaying results of determining the presence or absence of video data tampering. Further, Japanese Patent Application Laid-Open No. 2017-41841 discusses outputting video data in a case where the video data has not been tampered with while not outputting the video data in a case where the video data has been tampered with.

The technology discussed in Japanese Patent Application Laid-Open No. 2017-41841 is capable of displaying results of determining the presence or absence of video data tampering. However, untampered video data may not be protected in a case where video data tampering occurs.

### SUMMARY OF THE INVENTION

According to a first aspect of the present invention, there is provided a video reception apparatus as specified in claims 1 to 6. According to a second aspect of the present invention, there is provided a video transmission apparatus as specified in claims 7 to 13. According to a third aspect of the present invention, there is provided a video system as specified in claim 14. According to a fourth aspect of the present invention, there is provided a video reception method as specified in claim 15. According to a fifth aspect of the present invention, there is provided a video transmission method as specified in claim 16. According to a sixth aspect of the present invention, there is provided a method for a video system as specified in claim 17. According to a seventh aspect of the present invention, there is provided a program as specified in claim 18.

Further features of the present invention will become apparent from the following description of embodiments with reference to the attached drawings.

### BRIEF DESCRIPTION OF THE DRAWINGS

Fig. 1 is a diagram illustrating a network configuration according to each embodiment.
Fig. 2 is a block diagram illustrating a configuration of an imaging apparatus according to each embodiment.
Fig. 3 is a block diagram illustrating a configuration of a controller according to each embodiment.
Fig. 4 is a sequence diagram illustrating a process for detecting video tampering according to a first embodiment.
Fig. 5 is a flowchart illustrating a video tampering detection method according to the first embodiment.
Fig. 6 is a sequence diagram illustrating a process for detecting video tampering according to a second embodiment.
Fig. 7 is a diagram illustrating an example of a hardware configuration according to each embodiment.

### DESCRIPTION OF THE EMBODIMENTS

Various embodiments of the present invention will be described in detail below with reference to the attached drawings. Each embodiment makes it possible to increase the likelihood of untampered video data being protected in a case where video data tampering occurs. It should be noted that the embodiments described below are merely an example of an implementation of the present invention. As necessary, modifications or changes may be made based on a configuration of an apparatus to which the present invention is applied or based on various conditions, and the present invention is not necessarily limited to the embodiments described below. Further, not all combinations of configurations described in the embodiments are necessarily essential to a technical solution of the present invention. Further, the term "video" used hereinafter is not necessarily limited to a moving image and may also refer to a still image. Further, video data tampering may refer to an alteration of video content by deleting, adding, or replacing a specific frame in the video. Further, it may also refer to replacement of a specific item or person in the video with something else. Furthermore, it may also refer to an alteration of video using artificial intelligence (AI) technology, commonly known as deepfakes. The effectiveness against different types of tampering depends on the tampering detection technology used. While a tampering detection technology is described below, methods described below are not intended as limitations, and the present invention is applicable to various tampering detection methods. It is sufficient to be effective against tampering that can be detected by at least the tampering detection method. Further, the present invention can be used in various applications related to video. It should be noted that in each embodiment, transmission of a "response" may be skipped when appropriate.

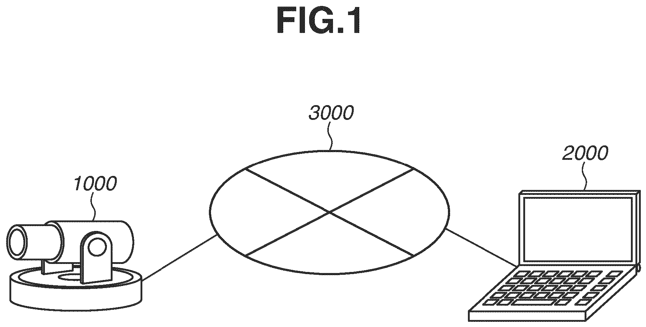

A first embodiment of the present invention will be described with reference to Figs. 1 to 5.

Fig. 1 is a network configuration diagram including an imaging apparatus (video transmission apparatus) 1000. There is also a client apparatus (video reception apparatus) 2000 according to the present embodiment. The imaging apparatus 1000 and the client apparatus 2000 form a video system. It should be noted that the imaging apparatus 1000 will be described as an example of a video transmission apparatus. Further, the client apparatus 2000 will be described as an example of a video reception apparatus. These are merely examples, and applications to other apparatuses are also possible. For example, a distribution server may be provided externally to the imaging apparatus 1000 and have a function as a video transmission apparatus.

The imaging apparatus 1000 is connected to the client apparatus 2000 via a network 3000 so that the imaging apparatus 1000 and the client apparatus 2000 can communicate with each other. The client apparatus 2000 transmits a command (information) for controlling a video format, an angle of view, or image quality to the imaging apparatus 1000. The imaging apparatus 1000 performs a process corresponding to the command and transmits a response to the command to the client apparatus 2000.

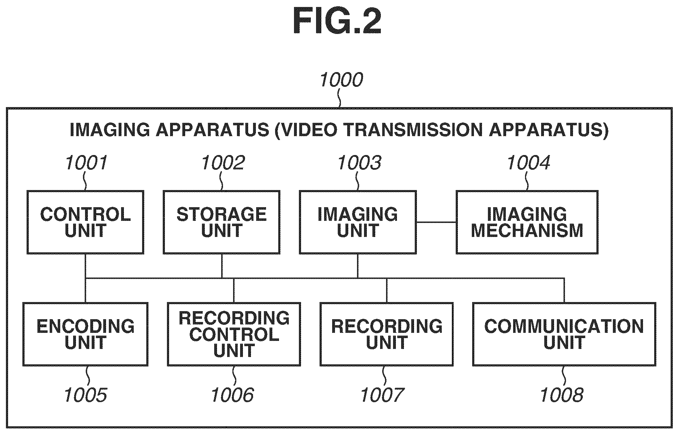

Fig. 2 is a block diagram illustrating a configuration of the imaging apparatus 1000. In Fig. 2, a control unit 1001 controls the entire imaging apparatus 1000. The control unit 1001 can be realized by, for example, a central processing unit (CPU).

A storage unit 1002 is used mainly as a storage area for various types of data, such as a storage area for a program executed by the control unit 1001, a work area for a program being executed, and an area for temporarily storing video data generated by an imaging unit 1003.

The imaging unit 1003 includes an image sensor. The imaging unit 1003 captures a subject image formed by an imaging mechanism 1004 described below, converts an acquired video signal into digital data (video data), and outputs the digital data (video data) as a captured image to the storage unit 1002.

The imaging mechanism 1004 includes an imaging optical system formed by a lens and other optical members. Further, the imaging mechanism 1004 may include pan, tilt, and zoom mechanisms for controlling an imaging direction and the angle of view.

An encoding unit 1005 compresses and encodes video data captured by the imaging unit 1003 based on a format compliant with a standard such as H.264 or H.265. It is also possible to use other compression and encoding methods compliant with a standard such as Alliance for Open Media Video 1 (AV1) or H.266.

During compression and encoding, the encoding unit 1005 generates an encrypted digital signature after calculating a hash value of the video data and attaches the encrypted digital signature to the video data as tampering detection data using a method such as describing the digital signature in Supplemental Enhancement Information (SEI) included in a Network Abstraction Layer (NAL) unit.

Further, the encoding unit 1005 generates a pair of public and private keys. This pair of public and private keys is used to generate a digital signature and is uniquely generated by the imaging apparatus 1000.

Next, the control unit 1001 transmits the generated public key data to the client apparatus 2000 via a communication unit 1008. The communication unit 1008 functions as transmission and reception units.

Further, the encoding unit 1005 generates the hash value as described above based on a feature extracted from the video data.

First, the encoding unit 1005 extracts a feature from each frame of the video. This feature includes brightness, contrast, edge information, color distribution, or other visual characteristics of the image. Any feature can be used. The feature of the video to be used here is selected based on the content of the video.

Next, the encoding unit 1005 combines the extracted features, as necessary, and generates a unique hash value.

Then, the encoding unit 1005 encrypts the generated hash value using the private key.

This encrypted hash value functions as a digital signature and is transmitted together with the video data to the client apparatus 2000. Such a digital signature is generated, for example, for each frame and attached to the video data. Furthermore, as another example, the digital signature may be attached for each group of pictures (GOP).

As described above, for example, the encoding unit 1005 also functions as a generation unit that generates tampering detection data (digital signature based on the hash value). Furthermore, it also functions as an attachment unit that attaches the tampering detection data to the video data. It should be noted that a component other than the encoding unit 1005 may have this function. For example, the control unit 1001 may have this function.

Further, as described, in a case where a tampering detection method that does not require attaching the tampering detection data to the video data at the video transmission end is used, the imaging apparatus 1000 does not necessarily need to include the generation unit or the attachment unit.

The video data generated as described above is output to the storage unit 1002 and stored temporarily.

A recording control unit 1006 performs control related to recording of video data captured by the imaging unit 1003. In the case of recording video data, the video data stored in the storage unit 1002 is recorded (stored) in a recording unit 1007 described below. The recording control unit 1006 may control video data recording directly from the imaging unit 1003 to the recording unit 1007.

The recording unit 1007 is used as a storage area (storage) to store the captured video data. The recording unit 1007 can be realized using a recording device such as a hard disk drive (HDD) or a solid state drive (SSD). Alternatively, it can also be realized using a Secure Digital (SD) card slot so that an external recording medium can be used. Further, recording may be performed in the recording unit 1007 external to the imaging apparatus 1000 via a Universal Serial Bus (USB) port or a network.

The communication unit 1008 receives a change command for changing various setting values and a control command from the client apparatus 2000 via the network 3000. Further, the communication unit 1008 transmits various types of data, such as a response (response) to each command or video data, to the client apparatus 2000. The commands are, for example, commands that are compliant with an Open Network Video Interface Forum (ONVIF) standard, or commands that are compliant with various other standards can also be used.

While a basic configuration of the imaging apparatus 1000 has been described with reference to Fig. 2, the processing blocks illustrated in Fig. 2 are merely an illustration of an example of an embodiment of an information processing apparatus according to the present embodiment, and this is not a limitation. Various modifications and changes can be made within the scope of the present invention, such as including an audio input unit and/or an audio output unit.

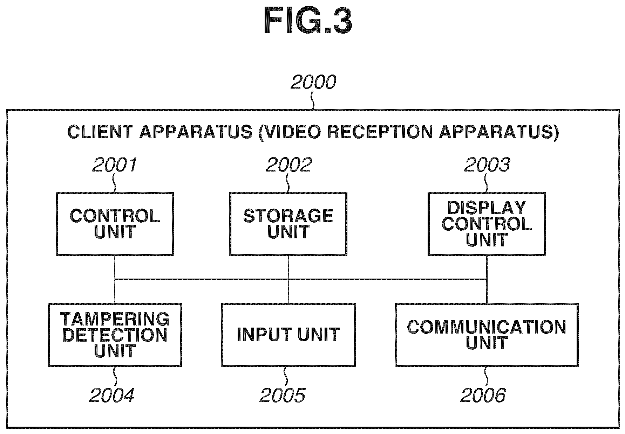

Fig. 3 is a block diagram illustrating a configuration of the client apparatus 2000.

A control unit 2001 is realized by, for example, a CPU and controls the entire client apparatus 2000.

A storage unit 2002 is used mainly as a storage area for various types of data, such as a storage area for a program executed by the control unit 2001, a work area for a program being executed, and information about an imaging apparatus that is currently on the network 3000 and can be connected.

A display control unit 2003 displays, on a display unit (not illustrated), various setting screens, a display screen for acquiring data, a viewer for the video received from the imaging apparatus 1000, and various messages. The display unit is realized by, for example, a liquid crystal display (LCD) or an organic electroluminescent (EL) display.

A tampering detection unit (tampering determination unit) 2004 determines whether the video data received from the imaging apparatus 1000 has been tampered with. The determination of whether the video data has been tampered with is performed using a method such as comparing the data contained in the NAL unit of the video data received from the imaging apparatus 1000 with the hash value calculated from the video data.

The tampering detection unit 2004 acquires the digital signature based on the hash value attached to the received video data. Further, the tampering detection unit 2004 also acquires the public key data in advance via a communication unit 2006. The tampering detection method using the digital signature will be described below.

It should be noted that the tampering detection data (digital signature based on the hash value) does not necessarily need to be attached to the video data. In this case, the tampering detection unit 2004 uses a tampering detection method that does not use data such as a hash value. An example of such a method will be described.

For example, the tampering detection unit 2004 may perform tampering detection using a technology based on compression artifacts. This technology is a technology for determining the presence or absence of tampering by analyzing artifacts related to a compression history of the video data. In this technology, an algorithm is used to detect a specific pattern or discontinuity in noise that occurs during compression. In particular, an irregularity in a quantization matrix or the presence of an unnatural edge at a block boundary serves as an indicator of tampering.

Further, the tampering detection unit 2004 may perform tampering detection using a technology that analyzes a noise pattern in an image. This technology detects whether the video has been tampered with by utilizing sensor noise and a pattern in image processing. A noise characteristic unique to a camera sensor (Photo Response Non-Uniformity (PRNU)) is analyzed, and in a case where the characteristic loses consistency in each frame of the video, it is determined that there is a high likelihood of tampering.

Further, the tampering detection unit 2004 may perform tampering detection using a detection technology that utilizes machine learning. This technology employs a machine learning model to learn and identify distinctive artifacts resulting from various tampering methods. Specifically, a convolutional neural network (CNN) and a generative adversarial network (GAN) are trained to detect video tampering with high accuracy. In this method, the model is trained using a large amount of normal video data and tampered video data to realize robust detection performance even for a new data model.

Further, the tampering detection unit 2004 may perform tampering detection using a detection technology based on multimodal analysis. This technology improves tampering detection accuracy by simultaneously analyzing a plurality of features of the video data. By combining and analyzing information such as an image quality indicator of the video, a frequency spectrum of audio, and metadata, a plurality of clues necessary for identifying tampering is provided.

As described above, the tampering detection unit 2004 is capable of performing tampering detection by analyzing the received video data. The tampering detection unit 2004 can also use various other tampering detection technologies.

Referring back to the description of Fig. 3, an input unit 2005 is realized by, for example, a keyboard, a button, a directional pad, a touch panel, a mouse, and their input interfaces and notifies the control unit 2001 of details of operations performed by a user. The user can perform an operation while viewing a user interface displayed on the display unit.

The communication unit 2006 transmits various commands, including a command to start video recording, to the imaging apparatus 1000 via the network 3000. Further, the communication unit 2006 receives responses to the transmitted commands and video data from the imaging apparatus 1000. As described above, the communication unit 2006 functions as a transmission unit and a reception unit.

While a basic configuration of the client apparatus 2000 has been described with reference to Fig. 3, the processing blocks illustrated in Fig. 3 are merely an illustration of an example of an embodiment of a video reception apparatus according to the present invention, and this is not a limitation. Various modifications and changes can be made within the scope of the present invention, such as including an image analysis unit and/or a recording unit.

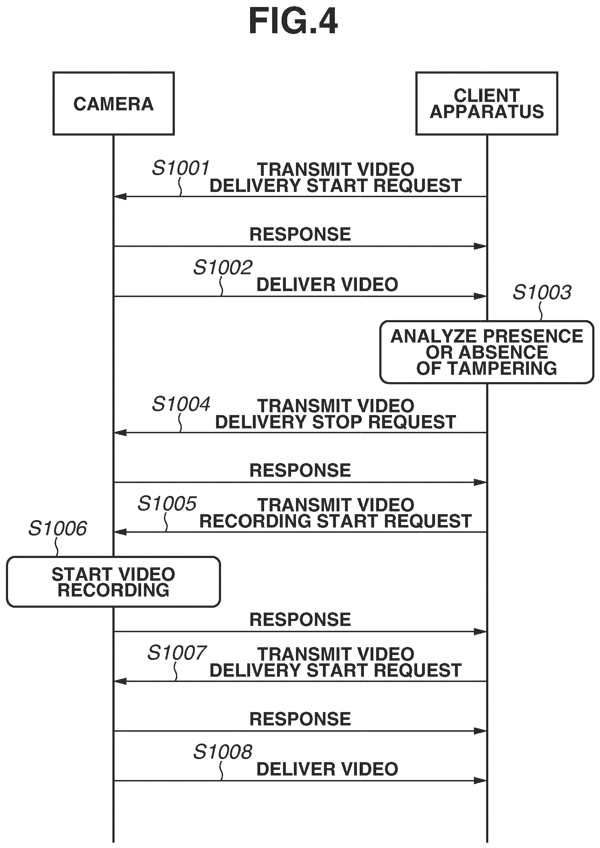

Next, a process for detecting video tampering according to the present embodiment will be described with reference to a sequence diagram in Fig. 4.

In step S1001, the control unit 2001 of the client apparatus 2000 transmits a command to start video data transmission (delivery start request) to the imaging apparatus 1000 via the communication unit 2006. This command may be, for example, a command compliant with the ONVIF standard. Alternatively, a method for requesting delivery over the Real-time Transport Protocol (RTP) using a Real Time Streaming Protocol (RTSP) command may be used, or other methods may be used. It should be noted that RTSP stands for Real Time Streaming Protocol. Further, RTP stands for Real-time Transport Protocol.

Upon receiving the delivery start request command, the imaging apparatus 1000 determines whether video delivery can be performed based on a setting included in the delivery start request, and responds with the determination result. Specifically, a response indicating the determination result is transmitted to the client apparatus 2000.

In a case where delivery can be performed, in step S1002, the control unit 1001 of the imaging apparatus 1000 starts video data delivery (transmission) via the communication unit 1008 based on the setting included in the delivery start request. As necessary, tampering detection data is attached to the video data.

Further, the video data is delivered in, for example, a streaming format, but this is not a limitation. For example, the video data may be transmitted in a file format or as still images.

In step S1003, the tampering detection unit 2004 of the client apparatus 2000 detects the presence or absence of tampering in the received video data. One of the plurality of tampering detection methods described in the embodiments can be used. A plurality of tampering detection methods can be used in combination.

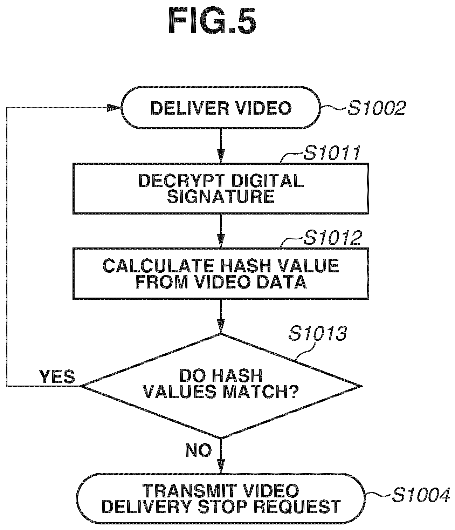

An example of a tampering detection method used by the client apparatus 2000 in step S1003 will be described with reference to Fig. 5. This method uses the digital signature.

In step S1011, the tampering detection unit 2004 decrypts the encrypted digital signature attached to the received video data using the public key received separately from the imaging apparatus 1000. As a result of the decryption, a hash value based on the video data generated by the imaging apparatus 1000 is obtained. It should be noted that the encrypted digital signature is acquired from, for example, the SEI of the video data.

In step S1012, the tampering detection unit 2004 applies the same hash function used by the imaging apparatus 1000 to the received video data and calculates a hash value.

In step S1013, the tampering detection unit 2004 compares the hash value attached to the received video data with the hash value calculated from the received video data by the tampering detection unit 2004. In step S1013, in a case where the hash values match (YES in step S1013), it is determined that there is no tampering.

On the other hand, in a case where the hash value attached to the video data and the hash value calculated from the received video data do not match in step S1013 (NO in step S1013), the tampering detection unit 2004 determines that the video has been tampered with. Then, in step S1004, the control unit 2001 transmits a request command to stop video delivery to the imaging apparatus 1000 via the communication unit 2006.

It should be noted that this request command to stop video delivery does not necessarily need to be transmitted.

In other words, video delivery may be continued. In this case, the display control unit 2003 may display information notifying that the video has been tampered with on the display unit, although this is not necessarily required.

Referring back to the description of Fig. 4, in a case where a request command to stop video delivery is transmitted from the client apparatus 2000 to the imaging apparatus 1000 in step S1004, the imaging apparatus 1000 stops video data delivery. Then, a response indicating that video data delivery has been stopped is transmitted to the client apparatus 2000.

Then, in a case where it is determined in step S1003 that the video data has been tampered with, the processes of steps S1005 to S1008 are performed. On the other hand, in a case where it is determined in step S1003 that the video data has not been tampered with, the processes of steps S1005 to S1008 are not performed. Further, while the processes of steps S1005 to S1008 are, for example, performed automatically without a new instruction from the user, a user interface (UI) such as a message may be displayed on the display unit to prompt the user to confirm whether to perform these processes, and the processes may be performed after obtaining confirmation from the user.

In a case where the tampering detection unit 2004 determines that the received video data has been tampered with, the following process is performed. Specifically, in step S1005, the control unit 2001 of the client apparatus 2000 transmits a request command (video recording start request command) to start video data recording to the imaging apparatus 1000 via the communication unit 2006. For example, a SetRecordingJobMode command or a SetRecordingJobConfiguration command based on the ONVIF standard may be used to start video data recording. It is also possible to use a method in which a unique command for starting video data recording via a network using a Hypertext Transfer Protocol (HTTP) request is preset and then transmitted to the imaging apparatus 1000. Any command that causes the imaging apparatus (video transmission apparatus) 1000 to start video data recording may be used.

In step S1006, upon receiving the request command, the imaging apparatus 1000 starts video data recording. Specifically, upon receiving the video recording start request command, the recording control unit 1006 of the imaging apparatus 1000 starts recording the video data in the recording unit 1007. As described above, the recording unit 1007 may be provided externally to the imaging apparatus 1000.

Further, the recording control unit 1006 can control the recording unit 1007 to record the video from the moment at which the video recording start request command is received. Further, in a case where the video recorded at the moment of the determination that the video data has been tampered with is stored in the storage unit 1002, the video data from that moment onward may be recorded in the recording unit 1007. Further, in a case where the video recorded before the moment of the determination that the video data has been tampered with is stored in the storage unit 1002, this video data may also be recorded in the recording unit 1007. In other words, the start time of the target video data may be the moment at which the video recording start request is received, or the imaging apparatus 1000 may retain the video data for a predetermined period in advance and record the video from a predetermined time before the request. In any case, recording of the video data or related video data may be started upon receiving information (notification) indicating that the video data has been tampered with. A predetermined command, a flag, or various other types of information can be used as the information indicating that the video data has been tampered with.

The control unit 1001 of the imaging apparatus 1000 transmits a response indicating that video recording has been started to the client apparatus 2000 via the communication unit 1008.

The processes of steps S1005 and S1006 described above are specifically intended for the purpose of protecting untampered video data in a case where video data tampering occurs.

It should be noted that the order of the processes of steps S1004 and S1005 may be reversed. In other words, step S1005 may be performed first.

Next, the processes of steps S1007 and S1008 will be described. These processes are specifically intended for the purpose of increasing the likelihood that the client apparatus (video reception apparatus) 2000 receives untampered video data after video data tampering is detected.

In a case where the tampering detection unit 2004 determines that the video data received using a first method has been tampered with, the following process is performed in step S1007. Specifically, the control unit 2001 of the client apparatus 2000 transmits, to the imaging apparatus 1000 via the communication unit 2006, a new request to start video delivery using a second method different from the previous method. In other words, a request to start video delivery using a delivery method different from the method specified in the delivery start request in step S1001 is transmitted. For example, in a case where a request for delivery using RTP is transmitted in step S1001, a command to start video data transmission using a secure (encrypted) protocol (communication method) such as Secure RTP (SRTP) may be transmitted. Further, in a case where a request for delivery using a standardized protocol such as RTP is transmitted in step S1001, a request for video delivery using a unique delivery method that is different from the standardized protocol and can be used by both the imaging apparatus 1000 and the client apparatus 2000 may be transmitted. Further, a file transfer function using File Transfer Protocol (FTP) or HTTP may also be included, and a request for video transfer using a file transfer protocol may be transmitted. In this case, a method of transferring a file to a server different from the client apparatus 2000 may be used.

In any case, in a case where the tampering detection unit 2004 determines that the video data has been tampered with, video delivery may be started using a delivery method different from the method used previously. Video tampering is often conducted by illicitly extracting a video stream during delivery. Thus, changing the video delivery method makes it difficult to extract the video, thereby reducing the likelihood of further video tampering.

Upon receiving the request to start video delivery using a method different from the previous method used before the detection of video tampering, the imaging apparatus 1000 transmits a response notifying that video delivery will be started to the client apparatus 2000. Then, in step S1008, the control unit 2001 of the client apparatus 2000 starts video data delivery via the communication unit 2006 using the newly specified delivery method. The tampering detection data described above may be attached to the video data.

As described above, the processes of steps S1007 and S1008 are specifically intended for the purpose of increasing the likelihood that the client apparatus (video reception apparatus) 2000 receives untampered video data after video data tampering is detected. Thus, to achieve this purpose, the processes of steps S1005 and S1006 for protecting untampered video data may be skipped. Specifically, in a case where video data tampering is detected, the processes of starting video data recording and changing a recording setting may be skipped.

On the other hand, to achieve the purpose of protecting untampered video data, the processes of steps S1007 and S1008 are not necessarily required.

As described above, each process illustrated in Figs. 4 and 5 can be selected or skipped as appropriate based on the purpose or the issue to be solved.

While the present embodiment has been described, the processes described above are merely an example of one embodiment of processes in the present invention and are not intended as limitations.

For example, the video delivery described in steps S1007 and S1008 may be performed additionally without transmitting the video delivery stop request in step S1004. Further, after it is determined that the additional video delivered in step S1008 has not been tampered with, the originally delivered video (stream) may be stopped.

Further, an example has been described in which the control unit 2001 of the client apparatus 2000 transmits the request command to the imaging apparatus 1000 via the communication unit 2006 to instruct the imaging apparatus 1000 to start video data recording in step S1005 in a case where it is determined that the video data has been tampered with.

Instead of transmitting this request command, the control unit 2001 of the client apparatus 2000 may transmit information (notification) indicating that the video data has been tampered with to the imaging apparatus 1000. The information indicating that the video data has been tampered with may be any information that can be agreed upon in advance between the imaging apparatus 1000 and the client apparatus 2000. As the information indicating that the video data has been tampered with, a predetermined command, a flag, or various other types of information can be used. In any case, any information may be used as long as the imaging apparatus 1000 can start video data recording upon receiving the information without receiving a command that directly instructs the imaging apparatus 1000 to start recording.

In a case where the imaging apparatus 1000 and the client apparatus 2000 are manufactured by the same manufacturer, it can be determined in advance to use desired information for notifying video tampering. In a case where the imaging apparatus 1000 and the client apparatus 2000 are not manufactured by the same manufacturer, a command of a standardized protocol can be used.

In step S1006, upon receiving the information, the imaging apparatus 1000 starts video data recording. Specifically, upon receiving the information indicating that the video data has been tampered with, the recording control unit 1006 of the imaging apparatus 1000 starts video data recording in the recording unit 1007. As described above, the recording unit 1007 may be provided externally to the imaging apparatus 1000.

Further, as in the example of using the request command (video recording start request command), the recording control unit 1006 can perform control to record the video from the moment at which the video recording start request command is received. Further, in a case where the video recorded at the moment of the determination that the video data has been tampered with is stored in the storage unit 1002, this video data may also be recorded in the recording unit 1007. Further, in a case where the video recorded before the moment of the determination that the video data has been tampered with is stored in the storage unit 1002, this video data may also be recorded in the recording unit 1007. In other words, the start time of video recording may be the moment at which the video recording start request is received, or the imaging apparatus 1000 may retain the video data for a predetermined period in advance and record the video from a predetermined time before the request. In any case, recording of the video data or related video data may be started upon receiving the information indicating that the video data has been tampered with.

Then, the control unit 1001 of the imaging apparatus 1000 transmits a response indicating that video recording has been started to the client apparatus 2000 via the communication unit 1008.

It should be noted that while tampering continues, the control unit 2001 of the client apparatus 2000 may transmit the information (notification) indicating that the video data has been tampered with to the imaging apparatus 1000 at predetermined intervals (e.g., every five seconds). In this case, if no information indicating that the video data has been tampered with is received for a predetermined period (e.g., five minutes) after step S1006, video recording may be stopped.

Further, the new video delivery start request transmitted in step S1007 may be a request to start reproducing the video recorded in step S1006. Further, instead of performing video delivery in step S1008, the imaging apparatus 1000 may also include an email transfer function and may transfer the recorded video data and video recording information via email to a preset destination using an email communication protocol.

It should be noted that, as described above, simply starting video recording based on tampering detection in step S1003 alone still produces the effect of allowing the imaging apparatus 1000 to protect the video that has not been transmitted over the network at the time of tampering. Thus, to achieve this effect, transmitting the request to start video delivery using a different delivery method in step S1007 and performing video delivery in step S1008 are not necessarily required. However, transmitting the request to start video delivery using a different delivery method and performing video delivery have the effect of reducing the likelihood of tampering on the network path. Therefore, to achieve this effect, starting video recording based on tampering detection in step S1003 is not necessarily required.

A second embodiment will be described with reference to Figs. 1 to 3 and 6.

It should be noted that the basic network configuration in Fig. 1, the basic configuration of the imaging apparatus 1000 in Fig. 2, and the basic configuration of the client apparatus 2000 in Fig. 3 are similar to those in the first embodiment, so that descriptions thereof will be omitted. Furthermore, descriptions of other parts similar to the first embodiment will be omitted as appropriate.

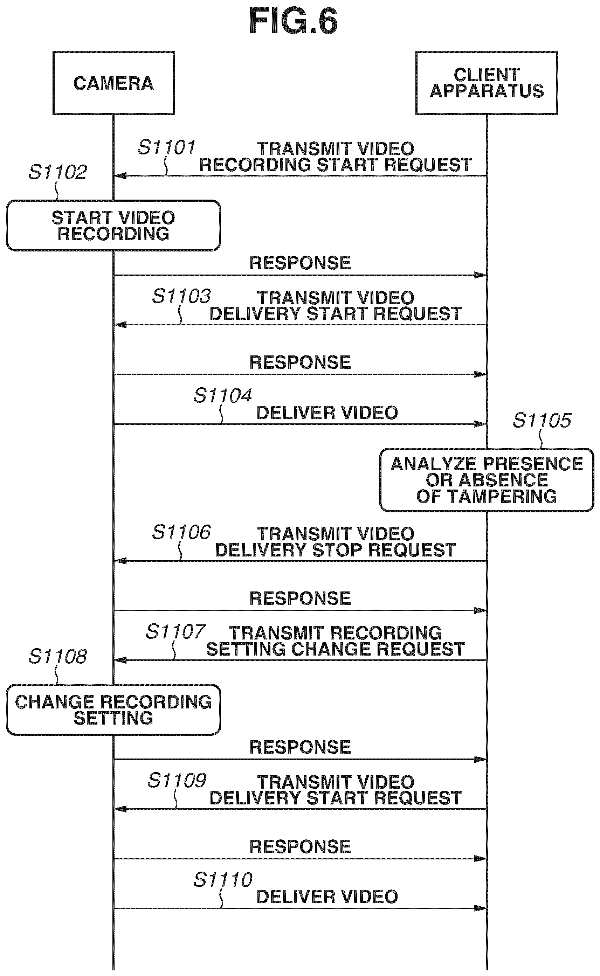

A process for detecting video tampering according to the present embodiment will be described with reference to a sequence diagram in Fig. 6.

In step S1101, the control unit 2001 of the client apparatus 2000 transmits a request command (video recording start request command) to the imaging apparatus 1000 via the communication unit 2006 to instruct the imaging apparatus 1000 to start video data recording.

In step S1102, upon receiving the request command via the communication unit 1008, the imaging apparatus 1000 starts video data recording. Specifically, upon receiving the video recording start request command, the recording control unit 1006 of the imaging apparatus 1000 starts video data recording in the recording unit 1007. As described above, the recording unit 1007 may be provided externally to the imaging apparatus 1000.

Further, the recording control unit 1006 can perform control to record the video from the moment at which the video recording start request command is received. Further, in a case where the video recorded before the moment at which the video recording start request command is received is stored in the storage unit 1002, this video data may also be recorded in the recording unit 1007. In other words, the start time of video recording may be the moment at which the video recording start request is received, or the imaging apparatus 1000 may retain the video data for a predetermined period in advance and record the video from a predetermined time before the request. Furthermore, based on a preset setting, video recording may be performed even without receiving a video recording start request command. For example, in a case where a setting is configured to always record video data, the imaging apparatus 1000 always performs video recording. Further, video data recording may be started in a case where an event, such as detection of a person, occurs. In any case, video data recording is performed even before tampering is detected in the present embodiment.

In step S1102, in a case where video recording is started based on the video recording start request command, the control unit 1001 of the imaging apparatus 1000 transmits a response indicating that video recording has been started to the client apparatus 2000 via the communication unit 1008.

In step S1103, the control unit 2001 of the client apparatus 2000 transmits a command (delivery start request) to start video data transmission to the imaging apparatus 1000 via the communication unit 2006. This command may be, for example, a command compliant with the ONVIF standard or an RTSP command. Alternatively, a method for requesting delivery over RTP using an RTSP command may be used, or other methods may be used.

Upon receiving the delivery start request command via the communication unit 1008, the imaging apparatus 1000 determines whether video delivery can be performed based on the setting included in the delivery start request, and responds with the determination result. In other words, a response indicating the determination result is transmitted to the client apparatus 2000.

In step S1104, the control unit 1001 of the imaging apparatus 1000 starts video data transmission via the communication unit 1008 based on the setting included in the delivery start request. As necessary, tampering detection data is attached to the video data.

In step S1105, the tampering detection unit 2004 of the client apparatus 2000 detects the presence or absence of tampering in the received video data. One of the tampering detection methods described above in the first embodiment can be used. A plurality of tampering detection methods can be used in combination. Since the method for determining the presence or absence of tampering is similar to that in step S1003, descriptions thereof will be omitted.

In a case where it is determined in step S1105 that the video data has been tampered with, in step S1106, the control unit 2001 of the client apparatus 2000 transmits a request command to stop video delivery to the imaging apparatus 1000 via the communication unit 2006.

In a case where a request command to stop video delivery is transmitted to the imaging apparatus 1000, in step S1106, the imaging apparatus 1000 stops video data delivery. Then, a response indicating that video data delivery has been stopped is transmitted to the client apparatus 2000.

It should be noted that this request command to stop video delivery does not necessarily need to be transmitted, as in the first embodiment. In other words, video delivery may be continued. In this case, the display control unit 2003 may display information notifying that the video has been tampered with on the display unit, although this is not necessarily required.

Then, in a case where it is determined in step S1105 that the video data has been tampered with, the processes of steps S1107 to S1110 are performed. On the other hand, in a case where it is determined in step S1105 that the video data has not been tampered with, the processes of steps S1107 to S1110 are not performed. Further, for example, the processes of steps S1107 to S1110 are performed automatically without a new instruction from the user. However, a message may be displayed to prompt the user to confirm whether to perform the processes of steps S1107 to S1110 in a case where it is determined that the video data has been tampered with, and the processes may be performed after obtaining confirmation from the user.

In a case where it is determined that the video data has been tampered with, in step S1107, the control unit 2001 of the client apparatus 2000 transmits a request command (recording setting change request command) to instruct the imaging apparatus 1000 to change the video data recording setting to the imaging apparatus 1000 via the communication unit 2006.

How this change request command changes video recording performed by the imaging apparatus 1000 will be described. Making at least one of the following changes can enhance the protection of untampered video data in a case where video data tampering occurs.

An example of a change to the video recording setting is a change to increase the retention period of recorded video. Since the capacity of the recording unit 1007 that records the video captured by the imaging apparatus 1000 is limited, a setting may be configured to overwrite data after a predetermined period has passed. For example, in a case where a setting is configured to overwrite data after a period of 24 hours has passed, a command to change the period to 48 hours is transmitted from the client apparatus 2000 to the imaging apparatus 1000. The periods presented above are merely examples.

For example, the following commands can be used to change the video data recording setting. For example, a change instruction can be issued using Max Retention Time in a Recording Control command based on the ONVIF standard. As another method, a unique command to change the video data recording setting via the network using an HTTP request may be preset and then transmitted to the imaging apparatus 1000. Any command that causes the imaging apparatus (video transmission apparatus) 1000 to change the video data recording setting may be used.

In a case where the imaging apparatus 1000 and the client apparatus 2000 are manufactured by the same manufacturer, it can be determined in advance to use desired information for notifying video tampering. In a case where the imaging apparatus 1000 and the client apparatus 2000 are not manufactured by the same manufacturer, a command of a standardized protocol can be used.

Other examples of change request commands include the following commands. For example, a command to stop (prohibit) overwriting of newly recorded video data after a predetermined period has passed in a case where a setting is configured to allow such overwriting may be used.

Besides the foregoing commands, a command to request a change to protect the recorded video data may also be used. Furthermore, to enhance the visibility of the protected video data, a command to improve the image quality of the recorded video may be transmitted.

The changes described above are merely examples, and any change that can enhance the protection of the source video data triggered by the occurrence of video data tampering may be employed. It should be noted that the order of the process of step S1106 and the processes of steps S1107 and S1108 may be reversed. In other words, the processes of steps S1107 and S1108 may be performed before step S1106.

In step S1108, upon receiving the recording setting change request command, the imaging apparatus 1000 changes the setting based on the request. Then, video data recording is continued based on the changed setting.

For example, in a case where a command to increase the video retention period is issued, the recording control unit 1006 of the imaging apparatus 1000 changes the time before the video is overwritten.

Further, in a case where a command to stop (prohibit) overwriting is received, the recording control unit 1006 of the imaging apparatus 1000 continues recording without overwriting the video afterward.

Further, in a case where a command to improve the image quality of the recorded video is issued, the recording control unit 1006 of the imaging apparatus 1000 continues recording with the changed image quality. The image quality herein refers to resolution and bit depth.

The control unit 1001 of the imaging apparatus 1000 transmits a response indicating that the video recording setting has been changed to the client apparatus 2000 via the communication unit 1008.

The above-described processes of steps S1005 and S1006 are specifically intended for the purpose of protecting untampered video data in a case where video data tampering occurs.

Next, the processes of steps S1109 and S1110 will be described. These processes are specifically intended for the purpose of increasing the likelihood that the client apparatus (video reception apparatus) 2000 receives untampered video data after video data tampering is detected.

In a case where the tampering detection unit 2004 determines that the video data has been tampered with, in step S1109, the control unit 2001 of the client apparatus 2000 transmits a new video delivery start request to the imaging apparatus 1000 via the communication unit 2006. At this time, a request to start video delivery using a delivery method different from the method used in the delivery started in step S1102 or the previous delivery is transmitted. For example, in a case where a request for delivery using RTP is transmitted in step S1001, a command to start video data transmission using a secure (encrypted) protocol (communication method) such as SRTP may be transmitted. Further, in a case where a request for delivery using a standardized protocol such as RTP is transmitted in step S1001, a request for video delivery using a unique delivery method that is different from the standardized protocol and can be used by both the imaging apparatus 1000 and the client apparatus 2000 may be transmitted. Further, a file transfer function using FTP or HTTP may also be included, and a request for video transfer using a file transfer protocol may be transmitted.

In this case, a method of transferring a file to a server different from the client apparatus 2000 may be used.

In any case, in a case where the tampering detection unit 2004 determines that the video data has been tampered with, video delivery may be started using a delivery method different from the method used previously. Video tampering is often conducted by illicitly extracting a video stream during delivery. Thus, changing the video delivery method can prevent further video tampering.

Upon receiving the request to start video delivery using a method different from the previous method used before the detection of video tampering, the imaging apparatus 1000 transmits a response notifying that video delivery will be started to the client apparatus 2000. Then, in step S1110, the control unit 1001 of the imaging apparatus 1000 starts video data delivery via the communication unit 1008 using the newly specified delivery method. The tampering detection data described above may be attached to this delivered video data.

As described above, the processes of steps S1109 and S1110 are specifically intended for the purpose of increasing the likelihood that the client apparatus (video reception apparatus) 2000 receives untampered video data after video data tampering is detected. Thus, to achieve this purpose, the processes of steps S1107 and S1108 for protecting untampered video data may be skipped. Specifically, in a case where video data tampering is detected, the processes of starting video data recording and changing the recording setting may be skipped.

On the other hand, to achieve the purpose of protecting untampered video data, the processes of steps S1109 and S1110 are not necessarily required.

As described above, each process illustrated in Fig. 6 can be selected or skipped as appropriate based on the purpose or the issue to be solved.

While a process for detecting video tampering according to the present embodiment has been described with reference to Fig. 6, the process illustrated in Fig. 6 is merely an example of one embodiment of an internal process in the present invention and is not intended as a limitation.

For example, the video delivery described in step S1110 may be performed additionally without transmitting the video delivery stop request in step S1106. Further, after it is determined that the additional video delivered in step S1110 has not been tampered with, the originally delivered video (stream) may be stopped.

Further, an example has been described in which the control unit 2001 of the client apparatus 2000 transmits the change request command to the imaging apparatus 1000 via the communication unit 2006 to instruct the imaging apparatus 1000 to change the video data recording setting in step S1107 in a case where it is determined that the video data has been tampered with.

Instead of transmitting this command, the control unit 2001 of the client apparatus 2000 may transmit information (notification) indicating that the video data has been tampered with to the imaging apparatus 1000. As the information indicating that the video data has been tampered with, a predetermined command, a flag, or various other types of information can be used. The information indicating that the video data has been tampered with may be any information that can be agreed upon in advance between the imaging apparatus 1000 and the client apparatus 2000. In any case, any information may be used as long as the imaging apparatus 1000 can change the video data recording setting upon receiving the information without receiving a command that directly instructs the imaging apparatus 1000 to change the recording setting.

In step S1108, upon receiving the information via the communication unit 1008, the imaging apparatus 1000 changes the video data recording setting. Specifically, upon receiving the information indicating that the video data has been tampered with, the recording control unit 1006 of the imaging apparatus 1000 changes the video data recording setting in the recording unit 1007 and starts video recording based on the new setting. As described above, the recording unit 1007 may be provided externally to the imaging apparatus 1000.

Then, the control unit 1001 of the imaging apparatus 1000 transmits a response indicating that the video recording setting has been changed to the client apparatus 2000 via the communication unit 1008.

It should be noted that while tampering continues, the control unit 2001 of the client apparatus 2000 may transmit the information (notification) indicating that the video data has been tampered with to the imaging apparatus 1000 at predetermined intervals (e.g., every five seconds).

In this case, if no information indicating that the video data has been tampered with is received for a predetermined period (e.g., five minutes or longer) after step S1108, the video recording setting may be restored to the original setting.

Further, the video delivery start request in step S1109 may be a request to start reproducing the video recorded in step S1102. At this time, the client apparatus 2000 may request the recorded video from the moment of tampering detection in step S1109 or the entire video from the start of recording.

Further, instead of performing video delivery in step S1109, an email transfer function may also be included, and the recorded video and video recording information may be transferred via email using an email communication protocol. The recording setting change in step S1108 may be a change to encrypt a recording disk, and encrypted information may be transferred using the email transfer function.

It should be noted that simply changing the video recording setting based on tampering detection in step S1105 alone still produces the effect of allowing the imaging apparatus 1000 to protect the recorded video that has not been transmitted over the network at the time of tampering. Thus, to achieve this effect, transmitting the request to start video delivery using a different delivery method in step S1109 and performing video delivery in step S1110 are not necessarily required. However, transmitting the request to start video delivery using a different delivery method and performing video delivery have the effect of reducing the likelihood of tampering on the network path. Therefore, to achieve this effect, changing the video recording setting based on tampering detection in step S1105 is not necessarily required.

While the embodiments of the present invention have been described, the present invention is not limited to the embodiments, and various modifications and changes can be made within the scope of the invention.

### (Other Embodiments)

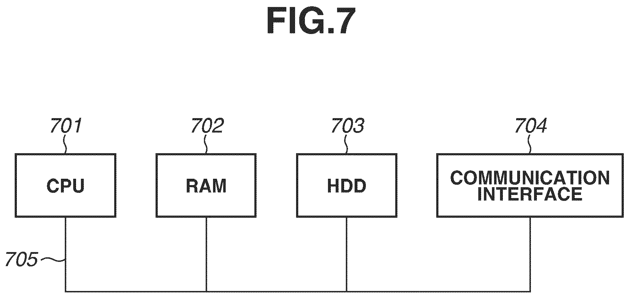

A hardware configuration for realizing each function of the imaging apparatus 1000 and the client apparatus 2000 according to each embodiment of the present invention will be described with reference to Fig. 7.

A random access memory (RAM) 702 temporarily stores a computer program executed by a CPU 701. Further, the RAM 702 temporarily stores data (command, video data) acquired from an external source via a communication interface 704. Further, the RAM 702 provides a work area used by the CPU 701 during execution of various processes. Further, the RAM 702 functions as, for example, a frame memory and/or a buffer memory.

The CPU 701 executes the computer program stored in the RAM 702. Instead of the CPU, a processor, such as a digital signal processor (DSP), or an application specific integrated circuit (ASIC) may also be used.

An HDD 703 stores an operating system program and video data. Further, the HDD 703 stores the computer program.

When necessary, the computer program and data stored in the HDD 703 are loaded into the RAM 702 under the control of the CPU 701 and then executed by the CPU 701.

Instead of the HDD, other storage media, such as a flash memory, may also be used. A bus 705 connects the hardware components. The hardware components exchange data via the bus 705. A hardware configuration according to each embodiment has been described.

It should be noted that the present invention can also be realized by a process in which one or more processors read a program for realizing one or more functions of the embodiments and execute the read program. The program may be supplied to a system or an apparatus that includes the processor via a network or a storage medium.

Further, the present invention can also be realized by a circuit (e.g., ASIC) configured to realize one or more functions of the embodiments.

Further, a control apparatus in each embodiment may be realized by the hardware illustrated in Fig. 7 or other hardware. Further, it may also be realized by software.

Further, the present invention is not limited to the embodiments, and various changes can be made without deviating from the scope of the present invention. For example, any combination of the embodiments and modified examples is also encompassed within the disclosure of the present specification.

For example, in step S1005, the control unit 2001 of the client apparatus 2000 transmits a request command to start video data recording to the imaging apparatus 1000. This command may include the recording setting specified in the command issued in step S1107 in the second embodiment. In this case, the imaging apparatus 1000 starts video recording based on the specified recording setting in step S1006. This enables further enhancement of the protection of the video data at the delivery source.

The present invention makes it possible to increase the likelihood of untampered video data being protected in a case where video data tampering occurs.

### Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

While the present invention has been described with reference to embodiments, it is to be understood that the invention is not limited to the disclosed embodiments, but is defined by the scope of the following claims.

## Claims

1. A video reception apparatus (2000) configured to communicate with a video transmission apparatus (1000), the video reception apparatus comprising:
reception means (2006) configured to receive video data via the communication;
determination means (2004) configured to determine whether the received video data has been tampered with;
transmission means (2006); and
control means (2001) configured to, in a case where the received video data is determined to have been tampered with, control the transmission means (2006) to transmit, to the video transmission apparatus, a command to start video data recording.

2. The video reception apparatus according to claim 1, wherein the control means (2001) is configured to, in a case where the received video data is determined to have been tampered with, control the transmission means (2006) to transmit, to the video transmission apparatus, a command to stop video data transmission from the video transmission apparatus (2000) to the video reception apparatus (1000).

3. The video reception apparatus according to claim 1 or 2, wherein a digital signature generated based on the video data is attached to the video data received via the communication, and the determination means (2004) is configured to determine whether the received video data has been tampered with based on the digital signature.

4. The video reception apparatus according to claim 1 or 2, wherein the determination means (2004) is configured to determine whether the received video data has been tampered with by analyzing the received video data.

5. The video reception apparatus according to any one of the preceding claims, wherein the command is a command compliant with an Open Network Video Interface Forum (ONVIF) standard.

6. The video reception apparatus according to any one of the preceding claims,
wherein the video transmission apparatus (1000) includes imaging means (1003, 1004), and
wherein the command is a command to start recording video data captured by the imaging means.

7. A video transmission apparatus (1000) configured to communicate with a video reception apparatus (2000), the video transmission apparatus comprising:
reception means (1008) configured to receive information indicating that video data received by the video reception apparatus via the communication has been tampered with; and
recording control means (1006) configured to start video data recording upon receiving the information.

8. The video transmission apparatus according to claim 7, wherein the recording control means (1006) is configured to control recording of the video data in a recording unit (1007) included in or external to the video transmission apparatus.

9. The video transmission apparatus according to claim 8, wherein the recording control means (1006) is configured to control recording, in the recording unit (1007), video data from a time period before the reception of the information.

10. The video transmission apparatus according to any one of claims 7 to 9, further comprising:
imaging means (1003, 1004); and
transmission means (1008) configured to transmit video data captured by the imaging means to the video reception apparatus,
wherein the recording control means (1006) is configured to, upon receiving the information, start recording the video data captured by the imaging means.

11. The video transmission apparatus according to any one of claims 7 to 10, wherein the recording control means (1006) is configured to, in a case where the information is not received for a predetermined period after the start of video data recording, stop the video data recording.

12. The video transmission apparatus according to any one of claims 7 to 11, further comprising an attachment means (1005) configured to attach, to video data to be transmitted to the video reception apparatus, a digital signature generated based on the video data.

13. The video transmission apparatus according to any one of claims 7 to 12, wherein the reception means (1008) configured to receive the information from the video reception apparatus (2000).

14. A video system comprising:
a video transmission apparatus (1000); and
a video reception apparatus (2000) configured to communicate with the video transmission apparatus,
wherein the reception apparatus comprises:
reception means (2006) configured to receive video data via the communication; and
determination means (2004) configured to determine whether the received video data has been tampered with,
wherein the video transmission apparatus (1000) comprises:
recording control means (1006) configured to start video data recording in a case where the received video data is determined by the determination means of the video reception apparatus to have been tampered with.

15. A video reception method for communicating with a video transmission apparatus (1000), the video reception method comprising:
receiving video data via the communication;
determining whether the received video data has been tampered with; and
transmitting, to the video transmission apparatus, a command to start video data recording in a case where the received video data is determined to have been tampered with.

16. A video transmission method for communicating with a video reception apparatus (2000), the video transmission method comprising:
receiving information indicating that video data received by the video reception apparatus via the communication has been tampered with; and
performing recording control to start video data recording upon receiving the information.

17. A method for a video system comprising a video transmission apparatus (1000) and a video reception apparatus (2000) configured to communicate with the video transmission apparatus, the method comprising:
receiving, by the video reception apparatus, video data via the communication;
determining, by the video reception apparatus, whether the received video data has been tampered with; and
starting video data recording by the video transmission apparatus in a case where the received video data is determined by the determination means of the video reception apparatus to have been tampered with.

18. A program configured to cause a computer to carry out the method according to claim 15, 16, or 17.
